# EUROPÄISCHE PATENTSCHRIFT

(11) **EP 1 370 453 B1**
(45) Veröffentlichungstag und Bekanntmachung des Hinweises auf die Patenterteilung: **13.10.2004**
(21) Anmeldenummer: 02727378.8
(22) Anmeldetag: 08.03.2002
(51) Int. Cl.: B61H 7/08

(54) **MAGNET-SCHIENENBREMSVORRICHTUNG**
MAGNET TRACK BRAKING DEVICE
DISPOSITIF MAGNETIQUE DE FREINAGE SUR RAIL

(30) Priorität: 09.03.2001 DE 10111685
(43) Veröffentlichungstag der Anmeldung: 17.12.2003
(73) Patentinhaber: KNORR-BREMSE Systeme für Schienenfahrzeuge GmbH, 80809 München (DE)
(72) Erfinder: LEHMANN, Henry, 08062 Zwickau (DE); KOIDL, Hermann, A-1060 Wien (AT)
(86) Internationale Anmeldenummer: PCT/EP2002/002564
(87) Internationale Veröffentlichungsnummer: WO 2002/072404

(56) Entgegenhaltungen:
- EP-A- 0 114 259
- EP-A- 0 716 970
- EP-A- 0 875 691
- FR-A- 2 495 559

## Beschreibung

Die Erfindung betrifft eine Magnet-Schienenbremsvorrichtung mit einem magnetischen Grundund/oder Trägerkörper, einem Polschuhbereich, wobei der Polschuhbereich einen magnetflußführenden Bereich sowie einen magnetflußtrennenden Bereich umfaßt.

Bei Magnetschienenbremsen handelt es sich im Prinzip um einen Elektromagneten, bestehend aus einer in Schienenrichtung langgezogenen Spule und hufeisenähnlichen Magnetkernen. Der in der Magnetspule fließende Gleichstrom bewirkt eine magnetische Spannung, die in dem Magnetkern einen magnetischen Fluß erzeugt, der sich über den Schienenkopf schließt. Die Größe der Bremskraft einer Magnetschienenbremse ist vom magnetischen Widerstand des Magnetkreises, das heißt der Geometrie und Permeabilität, der elektrischen Durchflutung, dem Reibwert zwischen Magnetschuh und Schiene sowie dem Schienenzustand abhängig.

Prinzipiell kann man nach dem konstruktiven Aufbau der Bremsmagnete zwei verschiedene Arten von Magneten unterscheiden. In einer ersten Ausführungsform besteht der Magnetkern aus zwei Stahlwangen, die beidseitig fest an den Spulenkörper geschraubt sind. Alternativ hierzu kann man den Bremsmagneten auch als Gliedermagneten ausbilden. Bei einer derartigen Ausführungsform ist der Magnetkern in zwei Endstücke und mehrere Zwischenglieder unterteilt. Die Endstücke sind fest mit dem Spulenkörper verschraubt und die Glieder können sich frei in der Spulenkastenöffnung bewegen und den Schienenunebenheiten folgen.

Betreffend die Ausführungsform von Magnetschienenbremsen wird auf die Veröffentlichung Bremsen für Schienenfahrzeuge, Handbuch bremstechnische Begriffe und Werte, Seite 45 der Knorr-Bremse AG, München, 1990,
verwiesen.

Als Reibwerkstoffe im Polschuhbereich wurden bei magnetischen Schienenbremsen gemäß dem Stand der Technik vorzugsweise St37-Stahl eingesetzt. Nachteilig an der Verwendung einer St37-Reibschicht war, daß vermehrt Aufschweißungen auftraten, die die Bremskraft der Bremse stark herabsetzten. Um diese wieder herzustellen, war es erforderlich, die Aufschweißungen von Hand zu entfernen, was hohe Wartungskosten verursachte. Die Verwendung von GGG40-Stahlguß führte zwar zu weniger Aufschweißungen, jedoch konnte mit derartigen Reibschichten nur geringe Bremskräfte aufgebracht werden.

Ein Reibwerkstoff, der sich durch eine geringe Aufschweißneigung auszeichnet und ausreichende Standzeiten zuläßt, ist beispielsweise ein Sinterwerkstoff als Reibwerkstoff für den Polschuhbereich, wobei der Sinterwerkstoff wenigstens einen Anteil an pulverisiertem Verschleißhemmer und einen Anteil schutzschichtbildenden Pulvers enthält.

Nachteil der Verwendung von Sinterwerkstoffen als Reibwerkstoff war das Problem, daß mit zunehmendem Verschleiß der Polschuhe die Haftkraft stark zugenommen hat und damit auch die zu erzeugenden Bremskräfte. Diese stiegen auf das doppelte bis dreifache gegenüber dem Neuzustand an.

Aufgabe der Erfindung ist es daher, eine Magnetschienenbremse anzugeben, bei denen als Reibwerkstoff für den Polschuhbereich bspw. Sinterwerkstoffe zur Vermeidung von Aufschweisungen eingesetzt werden können, bei denen die Nachteile des Standes der Technik vermieden werden. Erfindungsgemäß wird die Aufgabe dadurch gelöst, daß der magnetische Grund- und/oder Trägerkörper Materialien unterschiedlicher Magnetisierungskennlinien umfaßt, so daß ein Ansteigen der Induktion im Luftspalt zwischen der Magnetschienenbremse und der Schiene bei zunehmendem Verschleiß im Polschuhbereich vermieden wird. Durch die Kombination von Materialien mit unterschiedlichen Magnetisierungskennlinien im Magnetkreis wird erreicht, daß die durch den Verschleiß der Polschube ansteigende Induktion die Materialien in bestimmten Bereichen des Grundkörpers weiter in die magnetische Sättigung treibt und damit einem Ansteigen der Haftkraft, das heißt ein Ansteigen der Induktion im Luftspalt zwischen Magnetschienenbremse und Schiene entgegenwirkt. In einer vorteilhaften Ausführung der Erfindung kann vorgesehen sein, daß der magnetische Grund- und/oder Trägerkörper je zwei Schenkel und einen Zwischenbereich zwischen den Schenkeln umfaßt. Die je zwei Schenkel umfassen ein erstes magnetisches Material und der Zwischenbereich zwischen den Schenkeln ein zweites magnetisches Material. Das zweite magnetische Material, das zwischen den Schenkeln eingebracht wird, ist ein Material mit zu dem Grundmaterial, das heißt dem Material der Schenkel verschiedener magnetischer Kennlinie, das über die geforderten magnetischen Eigenschaften verfügt.

Der Vorteil der vorliegenden Erfindung liegt insbesondere darin, daß über die Standzeiten der Polschuhe hinweg eine gleichbleibende Bremskraft sichergestellt wird. Eine mit einer Zunahme der Bremskräfte verbundene höhere mechanische Belastung der Magnetschienenbremse kann so verhindert werden.

Nachfolgend soll die Erfindung anhand der Zeichnung beispielhaft dargestellt werden.

Es zeigt:

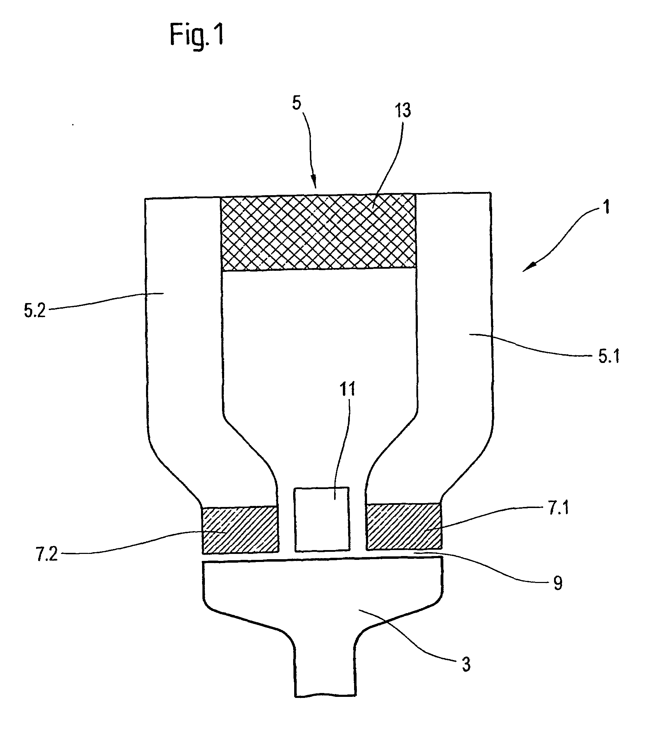

Fig. 1 eine schematische Ansicht eines Schienenstückes mit einer Magnetschienenbremse mit Polschuhen.

Die in Figur 1 gezeigte Magnetschienenbremse 1 besteht aus einer in die Längsrichtung einer Schiene 3 langgezogenen, nicht dargestellten Spule und aus einem Magnetkern bzw. Grund- oder Trägerkörper 5, dessen Schenkel 5.1 und 5.2 parallel zueinander verlaufen. Endseitig an den Schenkeln 5.1 und 5.2 sind Polschuhe 7.1, 7.2 angeordnet. Zwischen den Polschuhen 7.1, 7.2 und dem Schienenkopf der Schiene 3 wird ein Luftspalt 9 ausgebildet. Die Polschuhe sind bevorzugt aus einem Reibwerkstoffmaterial, insbesondere einem Sinterwerkstoff, ausgebildet.

In dem Zwischenraum zwischen dem linken und dem rechten Polschuh 7.1, 7.2 (Nord- beziehungsweise Südpol) kann eine den Zwischenraum ausfüllende amagnetische, extrem verschleißfeste, stoßfeste und temperaturbeständige Zwischenleiste 11 angeordnet sein.

Erfindungsgemäß umfaßt der magnetische Grund- und/oder Trägerkörper zwei Materialien unterschiedlicher Magnetisierungskennlinien. In vorliegendem Fall wird für die beiden Schenkel 5.1, 5.2 ein erstes Material verwendet und für den Grundkörperzwischenbereich 13 zwischen den beiden Schenkeln 5.1, 5.2 des Grundkörpers ein zweites magnetisches Material. Das zweite magnetische Material im Grundkörperzwischenbereich 13 zeichnet sich durch eine derartige Magnetisierungskennlinie aus, das, wenn durch den Verschleiß der Polschuhe sich der magnetische Widerstand aufgrund der kleineren Wegstrecke, d. h. dem geringer werdenden Luftspalt 9 verringert und die Induktion ansteigt, das zweite vom Material der Schenkel 5.1, 5.2 verschiedene Material des Grundkörperzwischenbereiches 13 weiter in die magnetische Sättigung getrieben wird und damit ein Ansteigen der Haftkraft, das heißt ein Ansteigen der Induktion im Luftspalt 9 entgegengewirkt wird.

Mit der vorliegenden Erfindung wird erstmals eine Magnetschienenbremse angegeben, die sich durch eine über die Standzeit der Polschuhe hinweg gleichbleibende Bremskraft auszeichnet, so daß eine mit der Zunahme der Bremskräfte verbundene höhere mechanische Belastung der Magnetschienenbremse vermindert wird.

### Bezugszeichenliste

- 1: Magnetschienenebene
- 3: Schiene
- 5: Grundkörper
- 5.1,5.2: Schenkel des Grundkörpers
- 7.1, 7.2: Polschuhe
- 9: Luftspalt
- 11: Zwischenleiste
- 13: Grundkörperzwischenbereich

## Patentansprüche

1. Magnet-Schienenbremsvorrichtung mit
1.1 einem magnetischen Grund- und/oder Trägerkörper (5);
1.2 einem Polschuhbereich, wobei der Polschuhbereich einen magnetflußführenden Bereich (7.1, 7.2) und einen magnetflußtrennenden Bereich (11) umfaßt, **dadurch gekennzeichnet, daß**
1.3 der magnetische Grund- und/oder Trägerkörper (5) Materialien unterschiedlicher Magnetisierungskennlinien umfaßt, so daß ein Ansteigen der Induktion im Luftspalt zwischen der Magnetschienenbremse und dem Schienenkopf (3) bei zunehmendem Verschleiß im Polschuhbereich vermieden wird.

2. Magnet-Schienenbremsvorrichtung gemäß Anspruch 1, **dadurch gekennzeichnet, daß** der magnetische Grund- und/oder Trägerkörper (5) je zwei Schenkel (5.1, 5.2) und einen Grundkörperzwischenbereich (13) zwischen den Schenkeln (5.1, 5.2) umfaßt.

3. Magnet-Schienenbremse nach einem der Ansprüche 1 bis 2, **dadurch gekennzeichnet, daß** die je zwei Schenkel (5.1, 5.2) ein erstes magnetisches Material und der Grundkörperzwischenbereich (13) zwischen den Schenkeln (5.1, 5.2) ein zweites magnetisches Material umfassen.

4. Magnet-Schienenbremsvorrichtung nach Anspruch 1, **dadurch gekennzeichnet, daß** der der Schiene (3) zugewandte Teil des Polschuhbereiches einen Reibwerkstoff umfaßt.

5. Magnet-Schienenbremsvorrichtung gemäß Anspruch 4, **dadurch gekennzeichnet, daß** der Reibwerkstoff ein Sinterwerkstoff ist.

6. Magnet-Schienenbremsvorrichtung, nach Anspruch 1 **dadurch gekennzeichnet, daß** der magnetflußtrennende Bereich als in Längsrichtung der magnetischen Schienenbremse verlaufende Zwischenleiste (11) ausgebildet ist.

## Claims

1. Magnetic rail braking device with
1.1 a magnetic base and/or support body (5);
1.2 a pole shoe region, which pole shoe region has a magnetic flux-guiding region (7.1, 7.2) and a magnetic flux-separating region (11), **characterised in that**
1.3 the magnetic base and/or support body (5) incorporates materials with differing magnetisation characteristic curves so that an increase in induction in the air gap between the magnetic rail brake and the rail head (3) is prevented with increasing wear in the pole shoe region.

2. Magnetic rail braking device as claimed in claim 1, **characterised in that** the magnetic base and/or support body (5) has two respective legs (5.1, 5.2) and a base body intermediate region (13) between the legs (5.1, 5.2).

3. Magnetic rail brake as claimed in one of claims 1 to 2, **characterised in that** the two respective legs (5.1, 5.2) are made from a first magnetic material and the base body intermediate region (13) between the legs (5.1, 5.2) is made from a second magnetic material.

4. Magnetic rail braking device as claimed in claim 1, **characterised in that** the part of the pole shoe region directed towards the rail (3) is made from a friction material.

5. Magnetic rail braking device as claimed in claim 4, **characterised in that** the friction material is a sintered material.

6. Magnetic rail braking device as claimed in claim 1, **characterised in that** the magnetic flux-separating region is provided by means of an intermediate strip (11) extending in the longitudinal direction of the magnetic rail brake.

## Revendications

1. Dispositif magnétique de freinage sur rail comprenant :
1.1 un corps (5) magnétique de base et/ou de support;
1.2 une zone de sabot polaire, la zone de sabot polaire comprenant une zone (7.1, 7.2) de conduction du flux magnétique et une zone de séparation du flux magnétique, **caractérisé en ce que**,
1.3 le corps (5) magnétique de base et/ou de support comprend des matières ayant des courbes caractéristiques d'aimantation qui sont différentes, de sorte qu'une augmentation de l'induction dans l'entrefer entre le frein magnétique sur rail et le champignon (3) de rail est empêché lorsque la zone du sabot polaire s'use de plus en plus.

2. Dispositif magnétique de freinage sur rail suivant la revendication 1, **caractérisé en ce que** le corps (5) magnétique de base et/ou de support a respectivement deux branches (5.1, 5.2) et une zone (13) intermédiaire de corps de base entre les branches (5.1, 5.2).

3. Dispositif magnétique de freinage suivant l'une des revendications 1 à 2, **caractérisé en ce que** les respectivement deux branches (5.1, 5.2) comprennent une première matière magnétique et la zone (13) intermédiaire de corps de base entre les branches (5.1, 5.2) comprend une deuxième matière magnétique.

4. Dispositif magnétique de freinage suivant la revendication 1, **caractérisé en ce que** la partie, tournée vers le rail (3), de la zone de sabot polaire comprend un matériau d'usure.

5. Dispositif magnétique de freinage suivant la revendication 4, **caractérisé en ce que** le matériau d'usure est un matériau fritté.

6. Dispositif magnétique de freinage suivant la revendication 1, **caractérisé en ce que** la zone de séparation du flux magnétique est constituée sous la forme d'une réglette (11) intermédiaire s'étendant dans la direction longitudinale du frein magnétique sur rail.
